# EUROPEAN PATENT SPECIFICATION

(11) **EP 4 120 147 B1**
(45) Date of publication and mention of the grant of the patent: **26.06.2024**
(21) Application number: 20940082.9
(22) Date of filing: 12.06.2020
(51) Int. Cl.: G06N 20/00, G06N 5/045

(54) **DATA ESTIMATION DEVICE, METHOD, AND PROGRAM**
DATENSCHÄTZVORRICHTUNG, -VERFAHREN UND -PROGRAMM
DISPOSITIF D'ESTIMATION DE DONNÉES, PROCÉDÉ ET PROGRAMME

(43) Date of publication of application: 18.01.2023
(73) Proprietor: ASICS Corporation, Kobe-shi Hyogo 650-8555 (JP)
(72) Inventor: INOMATA Takashi, Kobe-shi Hyogo 650-8555 (JP)
(74) Representative: Marks & Clerk LLP
(86) International application number: PCT/JP2020/023286
(87) International publication number: WO 2021/250902

(56) References cited:
- WO-A1-2015/052851
- JP-A- 2015 076 076
- JP-A- 2016 031 714
- JP-A- 2016 031 714
- US-A1- 2008 190 202
- US-A1- 2020 134 369
- Miyake Takashi, Murata Junichi, Hirasawa Koutaro: "One-day- through seven-day-ahead electrical load forecasting in consideration of uncertainties of weather information", ELECTRICAL ENGINEERING IN JAPAN, vol. 115, no. 8, 15 December 1995 (1995-12-15), pages 22-32, XP055971701, US ISSN: 0424-7760, DOI: 10.1002/eej.4391150803

## Description

### [TECHNICAL FIELD]

The present invention relates to a data estimation technique for estimating an objective variable from an explanatory variable.

### [BACKGROUND ART]

As a machine learning method, decision tree learning for creating a classifier having a tree structure from training data including an explanatory variable and an objective variable is used. A classification result can be predicted for unknown input data using a learned decision tree. Further, random forest in which a plurality of decision trees are learned with training data randomly changed, and a prediction is made by taking a majority decision to enhancing generalization ability is used.

The learning device disclosed in Patent Literature 1 creates a plurality of decision trees, using pieces of training data each including an explanatory variable and an objective variable, which are configured by a combination of the explanatory variables and each estimate the objective variable on the basis of true or false of the explanatory variables. The learning device creates a linear model that is equivalent to the plurality of decision trees and lists all terms configured by a combination of the explanatory variables without omission to output a stable prediction result by using the linear model from input data. US 2020/134369 A1 describes a method that includes generating a visual environment for interactive development of a machine learning (ML) model. US 2008/190202 A1 describes a motion sensing apparatus generally comprising a housing unit operable to be attached to an object at an attachment position, an accelerometer operable to provide a signal corresponding to an acceleration measurement, and a processing system. JP 2016 031714 A describes a multiple regression analysis device and method. WO 2015/052851 A1 describes a customer data analysis system for analyzing itemized data,

### [CITATION LIST]

### [Patent Literature]

[Patent Literature 1] JP 2020-46891 A. US 2020/134369 A1. US 2008/190202 A1. JP 2016 031714 A. WO 2015/052851 A1.

### [SUMMARY OF INVENTION]

### [TECHNICAL PROBLEM]

Machine learning for predicting an objective variable from an explanatory variable has a problem that accuracy in objective variable estimation reaches a plateau.

The present invention has been made in view of such a problem, and it is therefore an object of the present invention to provide a data estimation technique capable of improving accuracy in estimation of an objective variable from an explanatory variable.

### [SOLUTION TO PROBLEM]

The invention is defined by the appended independent claims. Certain optional features are in accordance with the dependent claims. A data estimation device includes a learning unit that creates, using training data including an explanatory variable and an objective variable, a machine learning model that estimates an objective variable from an explanatory variable. The learning unit creates a machine learning model Mᵢ that estimates an objective variable Oᵢ from an explanatory variable group Eᵢ including one or more explanatory variables, sets a new explanatory variable group E_{i + 1} by adding the objective variable Oᵢ estimated by the machine learning model Mᵢ to the explanatory variable group Eᵢ, and creates a machine learning model M_{i + 1} that estimates an objective variable O_{i + 1} from the explanatory variable group E_{i + 1}, wherein i is repeatedly incremented by 1 from 1 to n, n being the number of objective variables.

Another aspect of the present invention is a data estimation method. The method includes a learning process of creating, using training data including an explanatory variable and an objective variable, a machine learning model that estimates an objective variable from an explanatory variable. The learning process includes creating a machine learning model Mᵢ that estimates an objective variable Oᵢ from an explanatory variable group Eᵢ including one or more explanatory variables, setting a new explanatory variable group E_{i + 1} by adding the objective variable Oᵢ estimated by the machine learning model Mᵢ to the explanatory variable group Eᵢ, and creating a machine learning model M_{i + 1} that estimates an objective variable O_{i + 1} from the explanatory variable group E_{i + 1}, wherein i is repeatedly incremented by 1 from 1 to n, n being the number of objective variables.

Note that any combination of the above-described components, or an entity that results from replacing expressions of the present invention among a method, a device, a system, a computer program, a data structure, a recording medium, and the like is also valid as an aspect of the present invention.

### [ADVANTAGEOUS EFFECTS OF INVENTION]

According to the present invention, it is possible to increase accuracy in estimation of an objective variable from an explanatory variable.

### [BRIEF DESCRIPTION OF DRAWINGS]

Fig. 1 is a configuration diagram of a data estimation device according to the present embodiment.
Fig. 2 is a flowchart for describing a procedure of creating a machine learning model by the data estimation device in Fig. 1.
Fig. 3 is a diagram for describing secondary data on running performance.
Fig. 4 is a flowchart for describing a data estimation procedure in an example.
Figs. 5(a) and 5(b) are diagrams for describing display examples of evaluation items output by an evaluation item display unit in Fig. 1.
Fig. 6 is a diagram for describing accuracy in objective variable estimation in the example.
Fig. 7 is a diagram for describing correlation coefficients between four objective variables A to D.
Figs. 8(a) and 8(b) are diagrams for describing correlation coefficients between a selected objective variable and the remaining objective variables.

### [DESCRIPTION OF EMBODIMENTS]

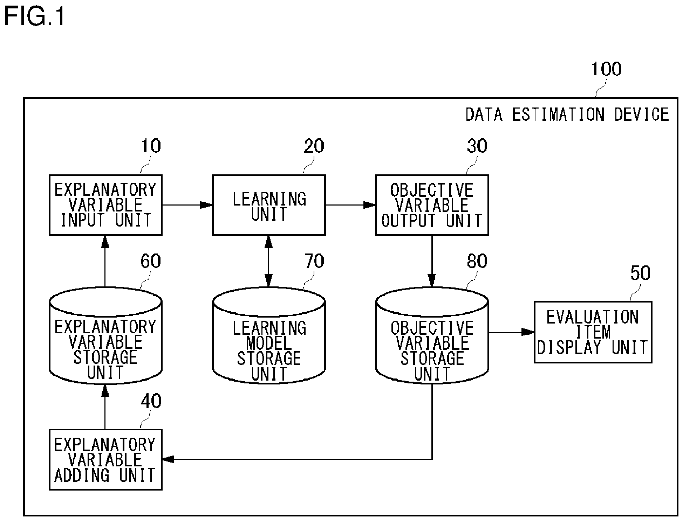

Fig. 1 is a configuration diagram of a data estimation device 100 according to the present embodiment. The data estimation device 100 includes an explanatory variable input unit 10, a learning unit 20, an objective variable output unit 30, an explanatory variable adding unit 40, an evaluation item display unit 50, an explanatory variable storage unit 60, a learning model storage unit 70, and an objective variable storage unit 80. This drawing illustrates a block diagram focused on functions, and such functional blocks may be implemented in various forms such as hardware, software, or a combination of hardware and software.

In a training phase, the data estimation device 100 creates, using training data including explanatory variables and objective variables, a machine learning model that estimates an objective variable from an explanatory variable. In a prediction phase, the data estimation device 100 inputs an unknown explanatory variable to the created machine learning model to predict an objective variable.

First, a configuration and operation of the data estimation device 100 in the training phase will be described. A value of an explanatory variable and a value of an objective variable are given to the learning unit 20 as training data. The learning unit 20 creates, using the given training data, a machine learning model that estimates an objective variable from an explanatory variable, and stores the machine learning model into the learning model storage unit 70. As a machine learning method, a regression model, a decision tree, a random forest, Bayesian estimation, a neural network, or the like may be used.

The objective variable output unit 30 outputs the value of the objective variable estimated from the value of the explanatory variable on the basis of the learned machine learning model, and stores the value of the objective variable into the objective variable storage unit 80. The explanatory variable adding unit 40 newly adds the objective variable estimated on the basis of the machine learning model to the explanatory variable and stores the explanatory variable into the explanatory variable storage unit 60.

The explanatory variable input unit 10 reads the newly set explanatory variable from the explanatory variable storage unit 60 and supplies the newly set explanatory variable to the learning unit 20. The learning unit 20 creates a machine learning model that estimates an objective variable from the newly set explanatory variable, and stores the machine learning model into the learning model storage unit 70. Subsequently, a machine learning model is repeatedly created with the estimated objective variable newly added to the explanatory variable.

Next, a configuration and operation of the data estimation device 100 in the prediction phase will be described. In the prediction phase, the learning unit 20 functions as a prediction unit.

The explanatory variable input unit 10 reads the value of the explanatory variable stored in the explanatory variable storage unit 60 as unknown data, and gives the explanatory variable to the learning unit 20.

The learning unit 20 reads the machine learning model stored in the learning model storage unit 70 and estimates an objective variable from the explanatory variable on the basis of the machine learning model. The objective variable output unit 30 stores the estimated value of the objective variable into the objective variable storage unit 80.

The explanatory variable adding unit 40 newly adds the objective variable estimated on the basis of the machine learning model to the explanatory variable and stores the explanatory variable into the explanatory variable storage unit 60.

The explanatory variable input unit 10 reads the newly set explanatory variable from the explanatory variable storage unit 60 and supplies the newly set explanatory variable to the learning unit 20. The learning unit 20 estimates an objective variable from the newly set explanatory variable on the basis of the machine learning model stored in the learning model storage unit 70. Subsequently, an objective variable is repeatedly estimated using the machine learning model with the estimated objective variable newly added to the explanatory variable.

The evaluation item display unit 50 calculates and displays a value of each evaluation item on the basis of the estimated value of the objective variable. The evaluation item display unit 50 may calculate the value of each evaluation item on the basis of the value of the explanatory variable and the estimated value of the objective variable.

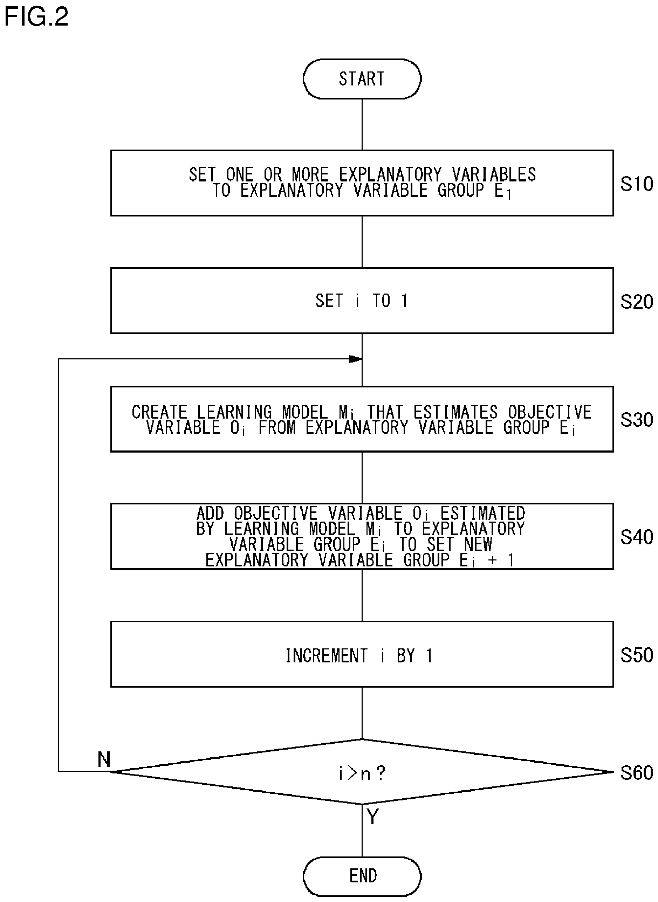

Fig. 2 is a flowchart for describing a procedure of creating a machine learning model by the data estimation device 100.

It is assumed that one or more explanatory variables and a plurality of objective variables Oᵢ (i = 1 to n) are given as training data.

The explanatory variable input unit 10 sets the one or more explanatory variables to an explanatory variable group E₁ (S10). The learning unit 20 sets a variable i to 1 (S20) .

The learning unit 20 creates a learning model Mᵢ that estimates an objective variable Oᵢ from an explanatory variable group Eᵢ, and the objective variable output unit 30 outputs the estimated objective variable Oᵢ to the objective variable storage unit 80 (S30).

The explanatory variable adding unit 40 adds the objective variable Oᵢ estimated by the learning model Mᵢ to the explanatory variable group Eᵢ to set a new explanatory variable group E_{i + 1}, and stores the explanatory variable group E_{i + 1} into the explanatory variable storage unit 60 (S40).

The learning unit 20 increments the variable i by 1 (S50). In a case where the variable i is greater than n (Y in S60), the processing of creating a machine learning model is brought to an end. In a case where the variable i is less than or equal to n (N in S60), the processing returns to step S30, and the subsequent procedure is repeated.

As described above, in a case where explanatory variables are unchanged and there are a plurality of objective variables, it is possible to increase the accuracy in objective variable estimation by the following procedures (1) to (3) :
(1) Build a machine learning model capable of estimating any objective variable using an explanatory variable prepared in advance;
(2) Build a new machine learning model with an estimated objective variable newly added to the explanatory variable; and
(3) Repeat the above (2).

Next, a case where secondary data on running performance is learned and predicted from primary data on running of a runner and physical characteristic data on the runner using the data estimation device 100 will be described as an example.

The primary data on running that is measurable using a sensor attached to shoes of the runner includes a running pace, a stride, a pitch, a grounding time, and a hang time. The physical characteristic data on the runner includes height and weight. Such measurable primary data and physical characteristic data serve as an explanatory variable.

The secondary data on running performance to be estimated includes a second peak value (denoted as "Fz 2nd max") of a z component of a ground reaction force (denoted as "Fz"), a propulsion force product, a braking force product, and a rising rate of the z component of the ground reaction force (denoted as "Fz Loading Rate"). Such secondary data serves as an objective variable.

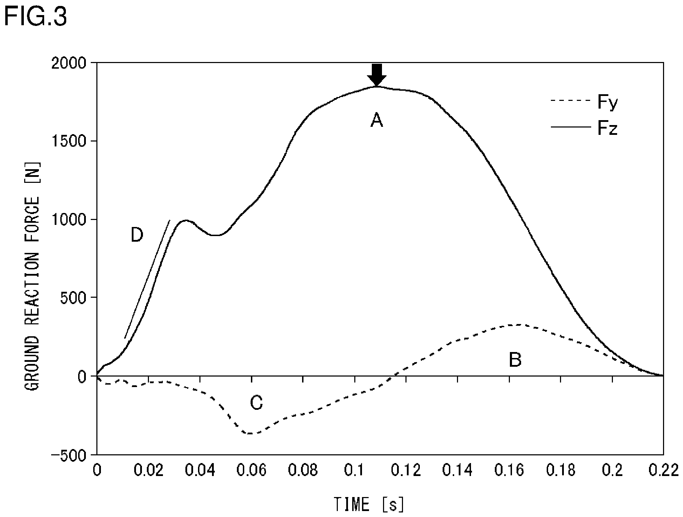

Fig. 3 is a diagram for describing the secondary data on running performance. The horizontal axis of the graph represents a time, and the vertical axis represents a ground reaction force. The ground reaction force has a component in a vertical direction (z direction) and a component in a front-back direction (y direction), a solid line represents the z component Fz of the ground reaction force, and a dashed line represents a y component Fy of the ground reaction force.

A second peak value of the z component Fz of the ground reaction force is Fz 2nd max, and a slope of the rise of the z component Fz of the ground reaction force is Fz Loading Rate. An area of a region where the y component of the ground reaction force has a positive value is the propulsion force product, and an area of a region where the y component of the ground reaction force has a negative value is the braking force product.

Hereinafter, for convenience of description, Fz 2nd max is referred to as secondary data A, the propulsion force product is referred to as secondary data B, the braking force product is referred to as secondary data C, and Fz Loading Rate is referred to as secondary data D. Such pieces of secondary data A to D are also referred to as objective variables A to D.

As an example, the pieces of secondary data A, B, C, D that are objective variables are estimated in this order from the primary data and the physical characteristic data that are explanatory variables using the machine learning model, and the estimated pieces of secondary data A, B, C, D are added to the explanatory variables in this order. The order in which the objective variables are estimated, in other words, the order in which the estimated objective variables are input to the explanatory variables, may be different from the above-described order, and how to determine an input order that makes the accuracy in objective variable estimation higher will be described later.

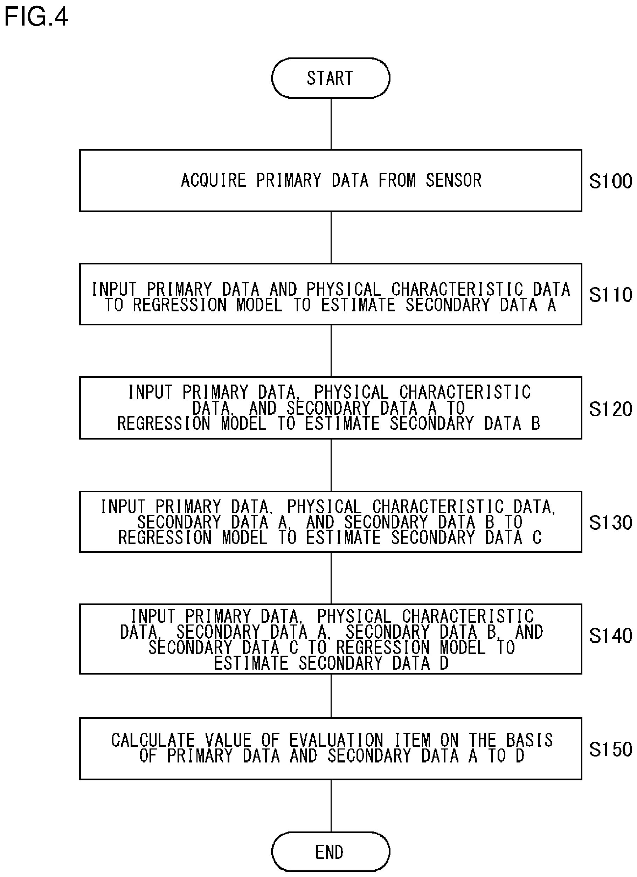

Fig. 4 is a flowchart for describing a data estimation procedure in the example.

The primary data on running is acquired from the sensor attached to the shoes of the runner and is stored into the explanatory variable storage unit 60 together with the physical characteristic data on the runner (S100).

The learning unit 20 inputs, to a regression model, the primary data and the physical characteristic data as explanatory variables to estimate the secondary data A on running performance as an objective variable (S110).

The explanatory variable adding unit 40 newly adds the estimated secondary data A to the explanatory variables, and the learning unit 20 inputs, to the regression model, the primary data, the physical characteristic data, and the secondary data A as explanatory variables to estimate the secondary data B as an objective variable (S120).

The explanatory variable adding unit 40 newly adds the estimated secondary data B to the explanatory variables, and the learning unit 20 inputs, to the regression model, the primary data, the physical characteristic data, the secondary data A, and the secondary data B as explanatory variables to estimate the secondary data C as an objective variable (S130).

The explanatory variable adding unit 40 newly adds the estimated secondary data C to the explanatory variables, and the learning unit 20 inputs, to the regression model, the primary data, the physical characteristic data, the secondary data A, the secondary data B, and the secondary data C as explanatory variables to estimate the secondary data D as an objective variable (S140).

The evaluation item display unit 50 calculates and displays the value of each evaluation item on the basis of the primary data and the secondary data A to D (S150).

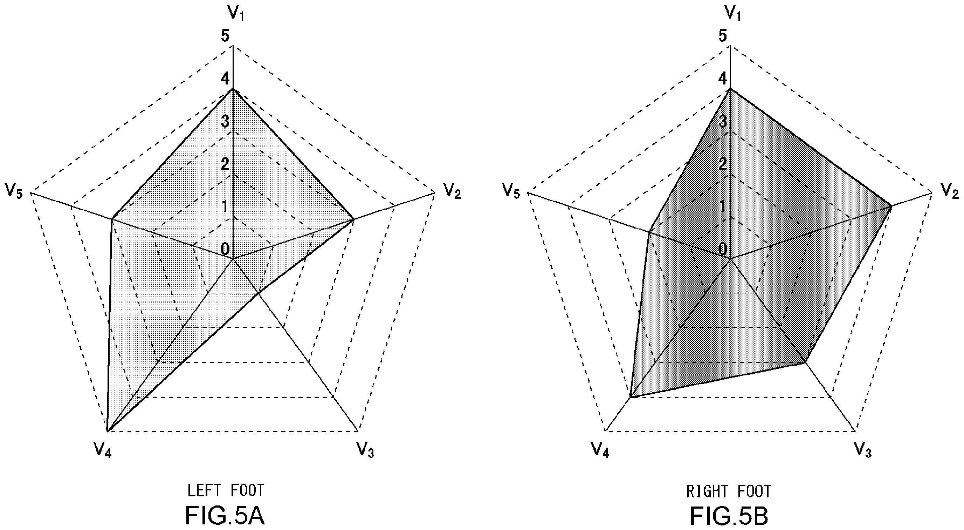

Figs. 5(a) and 5(b) are diagrams illustrating display examples of the evaluation items output by the evaluation item display unit 50. Evaluation items V₁ to V_{M} such as a kicking force of a left foot, a kicking force of a right foot, a degree of reduction in impact load, a braking effect, and a kicking efficiency are displayed on, for example, a scale of 0 to 5 on the basis of the secondary data A to D estimated as the primary data. A display mode may be a radar chart as illustrated in Figs. 5(a) and 5(b), or may be a bar graph.

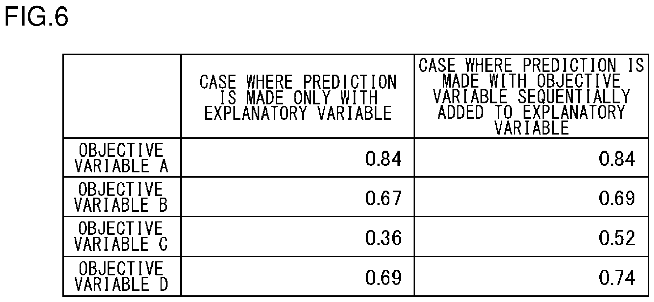

Fig. 6 is a diagram for describing the accuracy in objective variable estimation in the example. The primary data and the physical characteristic data in the above-described example were input to the regression model as explanatory variables, and coefficients of determination when the pieces of secondary data A to D were estimated as objective variables were obtained. For comparison, Fig. 6 shows coefficients of determination when the objective variables A to D were estimated only with the explanatory variables under a known method, and coefficients of determination when the objective variables estimated in the order of the secondary data A to D were added to the explanatory variables and estimated under the present method. The coefficient of determination is also referred to as a contribution ratio, and the closer to 1, the higher the accuracy in objective variable estimation.

The coefficient of determination of the objective variable A is 0.84 in a case where a prediction is made only with the explanatory variables, which is the first objective variable estimation, so that the coefficient of determination of the objective variable A is also 0.84 under the present technique.

The coefficient of determination of the objective variable B is 0.67 in a case where a prediction is made only with the explanatory variables, and is improved to 0.69 in a case where a prediction is made with the estimated objective variable A added to the explanatory variables.

The coefficient of determination of the objective variable C is 0.36 in a case where a prediction is made only with the explanatory variables, and is improved to 0.52 in a case where a prediction is made with the estimated objective variable B further added to the explanatory variables.

The coefficient of determination of the objective variable D is 0.69 in a case where a prediction is made only with the explanatory variables, and is improved to 0.74 in a case where a prediction is made with the estimated objective variable C further added to the explanatory variables.

In the example, sequentially adding each objective variable estimated by the regression model to the explanatory variables and estimating the next objective variable by the regression model makes it possible to improve the accuracy in objective variable estimation.

Next, a method for further improving the accuracy in objective variable estimation by changing the order in which the plurality of objective variables are input to the explanatory variables will be described.

In order to determine an order in which n objective variables are input as explanatory variables, a machine learning model is created in each input order to calculate accuracy in prediction about the n objective variables, and an input order in which the mean value of the accuracy in prediction about the n objective variables becomes the largest or the standard deviation of the accuracy in prediction about the n objective variables becomes the smallest is finally selected as an optimum input order.

In the above-described example, the accuracy in prediction about the four objective variables A to D was evaluated for all 24 input orders of the four objective variables A to D. In a case where the four objective variables were input in the order of A, D, B, C, the coefficients of determination of the objective variables A, B, C, D were 0.84, 0.70, 0.55, and 0.71, respectively, the mean value of the coefficients of determination of the four objective variables A to D was 0.7000, and the standard deviation of the coefficients of determination of the four objective variables A to D was 0.1186. In a case where input was made in an order of A, D, B, C among the 24 input orders, the mean value of the coefficients of determination of the four objective variables A to D was the largest, and the standard deviation was the smallest. The input order of A, D, B, C is selected as an optimum input order.

The optimum input order of the objective variables can be derived on the basis of correlation coefficients between the objective variables without testing all the input orders. Next, a method for determining the optimum input order of the objective variables will be described.

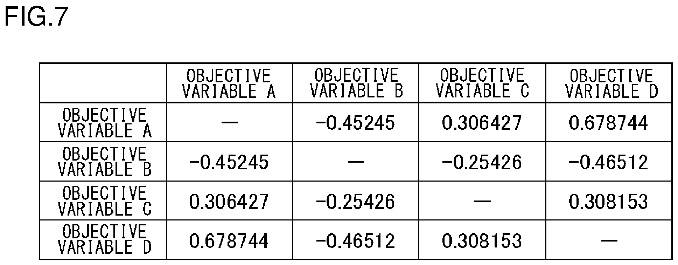

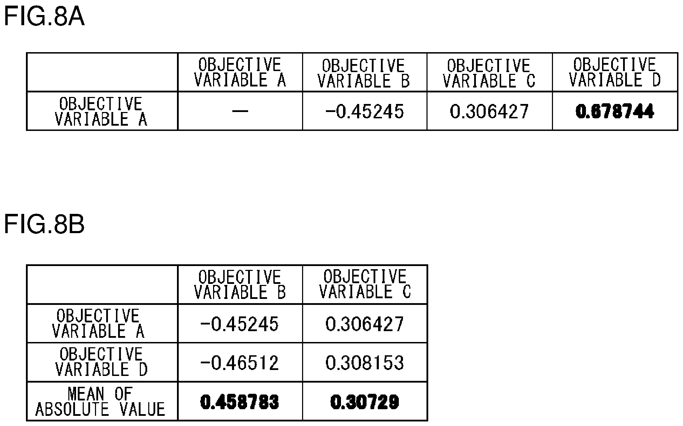

Fig. 7 is a diagram illustrating correlation coefficients between the four objective variables A to D. With reference to the correlation coefficients, the optimum input order of the objective variables is determined by the following procedure. Figs. 8(a) and 8(b) are obtained by extracting correlation coefficients between a selected objective variable and the remaining objective variables from Fig. 7, and the following procedure will be described with reference to Figs. 8(a) and 8(b).

(Step 1) Select an objective variable that is the highest in prediction accuracy when a regression model is built only with explanatory variables, and build a regression model with the objective variable added to the explanatory variables.

In the example, with reference to Fig. 6, in a case where a prediction is made only with the explanatory variables, the objective variable A is the highest in prediction accuracy, so that the objective variable A is first added to the explanatory variables, and the regression model is built.

(Step 2) Obtain correlation coefficients between the selected objective variable and all the remaining objective variables, select an objective variable having the largest absolute value of the correlation coefficient, and build the regression model with the objective variable newly added to the explanatory variables. Here, in a case where a plurality of objective variables are selected, the mean of the absolute values of the correlation coefficients is obtained.

In the example, as shown in Fig. 8(a), the objective variable D having the largest absolute value of the correlation coefficient with the selected objective variable A is newly added to the explanatory variables, and the regression model is built.

(Step 3) Repeat step 2.

In the example, as shown in Fig. 8(b), the objective variable B having the largest mean of the absolute values of the correlation coefficients with the selected objective variables A, B is newly added to the explanatory variables, and the regression model is built.

(Step 4) Repeat step 2 in a case where an objective variable still remains.

In the example, the regression model is built with the last objective variable C newly added to the explanatory variables.

As described above, the data estimation device 100 of the present embodiment can improve the accuracy in objective variable estimation by first building, in a case where there are a plurality of objective variables to be predicted from explanatory variables, a machine learning model capable of estimating any objective variable using the explanatory variables, and then repeatedly building, with an estimated objective variable added to the explanatory variables, a machine learning model capable of estimating the next objective variable. Note that the present invention is applicable to not only an example where an objective variable is added to explanatory variables on a one-by-one basis but also an example where a plurality of objective variables are added to the explanatory variables.

Although the example where the secondary data on running performance is estimated from the primary data on running of the runner and the physical characteristic data on the runner has been described, the present invention is applicable to any example as long as an objective variable is estimated from an explanatory variable.

### [INDUSTRIAL APPLICABILITY]

The present invention is applicable to a data estimation technique.

### [REFERENCE SIGNS LIST]

10 explanatory variable input unit, 20 learning unit, 30 objective variable output unit, 40 explanatory variable adding unit, 50 evaluation item display unit, 60 explanatory variable storage unit, 70 learning model storage unit, 80 objective variable storage unit, 100 data estimation device

## Claims

1. A data estimation device comprising a learning unit (20) structured to create, using training data including an explanatory variable and an objective variable, a machine learning model that estimates an objective variable from an explanatory variable, wherein
the learning unit (20) creates a machine learning model Mᵢ that estimates an objective variable Oᵢ from an explanatory variable group Eᵢ including one or more explanatory variables, sets a new explanatory variable group E_{i + 1} by adding the objective variable Oᵢ estimated by the machine learning model Mᵢ to the explanatory variable group Eᵢ, and creates a machine learning model M_{i + 1} that estimates an objective variable O_{i + 1} from the explanatory variable group E_{i + 1} wherein i is repeatedly incremented by 1 from 1 to n, n being the number of objective variables,
the explanatory variable comprises measurable primary data and physical characteristic data,
the measurable primary data comprises one or more of a running pace, a stride, a pitch, a grounding time, or a hang time measured using a sensor attached to at least one shoe of a runner,
the physical characteristic data comprises at least one of height and weight,
the objective variable comprises secondary data on running performance, and the secondary data comprises at least one of a second peak value of a z component of a ground reaction force, a propulsion force product, a braking force product, or a rising rate of the z component of the ground reaction force.

2. The data estimation device according to claim 1, wherein the learning unit (20) repeatedly creates a machine learning model while i is in a range of from 2 to n, where n is a natural number greater than or equal to 2.

3. The data estimation device according to claim 2, wherein in order to determine an order in which n objective variables are input as explanatory variables, the learning unit (20) creates a machine learning model in each input order to calculate accuracy in prediction about the n objective variables, and finally selects an input order in which a mean value of the accuracy in prediction about the n objective variables becomes largest or a standard deviation of the accuracy in prediction about the n objective variables becomes smallest.

4. The data estimation device according to claim 2, wherein the learning unit (20) selects, as an objective variable O₁, an objective variable highest in accuracy in prediction using the explanatory variables by the machine learning model from among n objective variables.

5. The data estimation device according to claim 4, wherein the learning unit (20) selects, in descending order of a correlation with already selected objective variables O₁ to Oᵢ, subsequent objective variables O_{i + 1}, for i = 1 to (n-1).

6. A data estimation method comprising a learning process of creating, using training data including an explanatory variable and an objective variable, a machine learning model that estimates an objective variable from an explanatory variable, wherein
the learning process includes creating a machine learning model Mᵢ that estimates an objective variable Oᵢ from an explanatory variable group Eᵢ including one or more explanatory variables, setting a new explanatory variable group E_{i + 1} by adding the objective variable Oᵢ estimated by the machine learning model Mᵢ to the explanatory variable group Eᵢ, and creating a machine learning model M_{i + 1} that estimates an objective variable O_{i + 1} from the explanatory, variable group E_{i + 1}, wherein i is repeatedly incremented by 1 from 1 to n, n being the number of objective variables,
the explanatory variable comprises measurable primary data and physical characteristic data,
the measurable primary data comprises one or more of a running pace, a stride, a pitch, a grounding time, or a hang time measured using a sensor attached to at least one shoe of a runner,
the physical characteristic data comprises at least one of height and weight,
the objective variable comprises secondary data on running performance, and the secondary data comprises at least one of a second peak value of a z component of a ground reaction force, a propulsion force product, a braking force product, or a rising rate of the z component of the ground reaction force.

7. A data estimation program that causes a computer to execute a learning process of creating, using training data including an explanatory variable and an objective variable, a machine learning model that estimates an objective variable from an explanatory variable, wherein
the learning process includes creating a machine learning model Mᵢ that estimates an objective variable Oᵢ from an explanatory variable group Eᵢ including one or more explanatory variables, setting a new explanatory variable group E_{i + 1} by adding the objective variable Oᵢ estimated by the machine learning model Mᵢ to the explanatory variable group Eᵢ, and creating a machine learning model M_{i + 1} that estimates an objective variable O_{i + 1} from the explanatory, variable group E_{i + 1}, wherein i is repeatedly incremented by 1 from 1 to n, n being the number of objective variables,
the explanatory variable comprises measurable primary data and physical characteristic data,
the measurable primary data comprises one or more of a running pace, a stride, a pitch, a grounding time, or a hang time measured using a sensor attached to at least one shoe of a runner,
the physical characteristic data comprises at least one of height and weight,
the objective variable comprises secondary data on running performance, and the secondary data comprises at least one of a second peak value of a z component of a ground reaction force, a propulsion force product, a braking force product, or a rising rate of the z component of the ground reaction force.

## Patentansprüche

1. Datenschätzungsvorrichtung, umfassend eine Lerneinheit (20), die dafür strukturiert ist, unter Verwendung von Trainingsdaten, die eine Erklärungsvariable und eine objektive Variable einschließen, ein Maschinenlernmodell zu erzeugen, das eine objektive Variable aus einer Erklärungsvariablen schätzt, wobei:
die Lerneinheit (20) ein Maschinenlernmodell M; erzeugt, das eine objektive Variable Oᵢ aus einer Erklärungsvariablengruppe Eᵢ schätzt, die eine oder mehrere Erklärungsvariablen einschließt, eine neue Erklärungsvariablengruppe E_{i + 1} durch Hinzufügen der durch das Maschinenlernmodell Mᵢ geschätzten objektiven Variablen Oᵢ zu der Erklärungsvariablengruppe Eᵢ einstellt und ein Maschinenlernmodell M_{i + 1} erzeugt, das eine objektive Variable O_{i + 1} aus der Erklärungsvariablengruppe E_{i + 1} schätzt, wobei i wiederholt von 1 bis n um 1 inkrementiert wird, wobei n die Anzahl der objektiven Variablen ist,
die Erklärungsvariable messbare Primärdaten und physikalische charakteristische Daten umfasst,
die messbaren Primärdaten eines oder mehrere von einem Lauftempo, einer Spreizung, einer Schrittlänge, einer Bodenkontaktzeit oder einer Hängezeit umfassen, die unter Verwendung eines Sensors gemessen werden, der an mindestens einem Schuh eines Läufers angebracht ist,
die physikalischen charakteristischen Daten mindestens eines von Körpergröße und Gewicht umfassen,
die objektive Variable Sekundärdaten zur Laufleistung umfasst und die Sekundärdaten mindestens eines von einem zweiten Spitzenwert einer z-Komponente einer Bodenreaktionskraft, einem Vortriebskraftprodukt, einem Bremskraftprodukt oder einer Anstiegsrate der z-Komponente der Bodenreaktionskraft umfassen.

2. Datenschätzungsvorrichtung nach Anspruch 1, wobei die Lerneinheit (20) wiederholt ein Maschinenlernmodell erzeugt, während i in einem Bereich von 2 bis n liegt, wobei n eine natürliche Zahl größer als oder gleich 2 ist.

3. Datenschätzungsvorrichtung nach Anspruch 2, wobei, um eine Reihenfolge zu bestimmen, in der n objektive Variablen als Erklärungsvariablen eingegeben werden, die Lerneinheit (20) ein Maschinenlernmodell in jeder Eingabereihenfolge erzeugt, um die Vorhersagegenauigkeit über die n objektiven Variablen zu berechnen, und schließlich eine Eingabereihenfolge auswählt, in der ein Mittelwert der Vorhersagegenauigkeit über die n objektiven Variablen am größten wird oder eine Standardabweichung der Vorhersagegenauigkeit über die n objektiven Variablen am kleinsten wird.

4. Datenschätzungsvorrichtung nach Anspruch 2, wobei die Lerneinheit (20) unter Verwendung der Erklärungsvariablen durch das Maschinenlernmodell aus n objektiven Variablen eine objektive Variable mit der höchsten Vorhersagegenauigkeit als objektive Variable O₁ auswählt.

5. Datenschätzungsvorrichtung nach Anspruch 4, wobei die Lerneinheit (20) in absteigender Reihenfolge einer Korrelation mit bereits ausgewählten objektiven Variablen O₁ bis Oᵢ nachfolgende objektive Variablen O_{i + 1} für i = 1 bis (n-1) auswählt.

6. Verfahren zur Datenschätzung, umfassend einen Lernprozess zum Erzeugen eines Maschinenlernmodells, das eine objektive Variable aus einer Erklärungsvariable schätzt, unter Verwendung von Trainingsdaten, die eine Erklärungsvariable und eine objektive Variable einschließen, wobei
der Lernprozess das Erzeugen eines Maschinenlernmodells Mᵢ, das eine objektive Variable Oᵢ aus einer Erklärungsvariablengruppe Eᵢ schätzt, die eine oder mehrere Erklärungsvariablen einschließt, das Einstellen einer neuer Erklärungsvariablengruppe E_{i + 1} durch Hinzufügen der durch das Maschinenlernmodell Mᵢ geschätzten objektiven Variablen Oᵢ zu der Erklärungsvariablengruppe Eᵢ und das Erzeugen eines Maschinenlernmodells M_{i + 1} einschließt, das eine objektive Variable O_{i + 1} aus der Erklärungsvariablengruppe E_{i + 1} schätzt, wobei i wiederholt von 1 bis n um 1 inkrementiert wird, wobei n die Anzahl der objektiven Variablen ist,
die Erklärungsvariable messbare Primärdaten und physikalische charakteristische Daten umfasst,
die messbaren Primärdaten eines oder mehrere von einem Lauftempo, einer Spreizung, einer Schrittlänge, einer Bodenkontaktzeit oder einer Hängezeit umfassen, die unter Verwendung eines Sensors gemessen werden, der an mindestens einem Schuh eines Läufers angebracht ist,
die physikalischen charakteristischen Daten mindestens eines von Körpergröße und Gewicht umfassen,
die objektive Variable Sekundärdaten zur Laufleistung umfasst und die Sekundärdaten mindestens eines von einem zweiten Spitzenwert einer z-Komponente einer Bodenreaktionskraft, einem Vortriebskraftprodukt, einem Bremskraftprodukt oder einer Anstiegsrate der z-Komponente der Bodenreaktionskraft umfassen.

7. Datenschätzungsprogramm, das einen Computer veranlasst, einen Lernprozess zum Erzeugen eines Maschinenlernmodells, das eine objektive Variable aus einer Erklärungsvariable schätzt, unter Verwendung von Trainingsdaten, die eine Erklärungsvariable und eine objektive Variable einschließen, auszuführen, wobei
der Lernprozess das Erzeugen eines Maschinenlernmodells Mᵢ, das eine objektive Variable Oᵢ aus einer Erklärungsvariablengruppe Eᵢ schätzt, die eine oder mehrere Erklärungsvariablen einschließt, das Einstellen einer neuer Erklärungsvariablengruppe E_{i + 1} durch Hinzufügen der durch das Maschinenlernmodell Mᵢ geschätzten objektiven Variablen Oᵢ zu der Erklärungsvariablengruppe Eᵢ und das Erzeugen eines Maschinenlernmodells M_{i + 1} einschließt, das eine objektive Variable O_{i + 1} aus der Erklärungsvariablengruppe E_{i + 1} schätzt, wobei i wiederholt von 1 bis n um 1 inkrementiert wird, wobei n die Anzahl der objektiven Variablen ist,
die Erklärungsvariable messbare Primärdaten und physikalische charakteristische Daten umfasst,
die messbaren Primärdaten eines oder mehrere von einem Lauftempo, einer Spreizung, einer Schrittlänge, einer Bodenkontaktzeit oder einer Hängezeit umfassen, die unter Verwendung eines Sensors gemessen werden, der an mindestens einem Schuh eines Läufers angebracht ist,
die physikalischen charakteristischen Daten mindestens eines von Körpergröße und Gewicht umfassen,
die objektive Variable Sekundärdaten zur Laufleistung umfasst und die Sekundärdaten mindestens eines von: einem zweiten Spitzenwert einer z-Komponente einer Bodenreaktionskraft, einem Vortriebskraftprodukt, einem Bremskraftprodukt oder einer Anstiegsrate der z-Komponente der Bodenreaktionskraft umfassen.

## Revendications

1. Dispositif d'estimation de données comprenant une unité d'apprentissage (20) structurée pour créer, en utilisant des données d'apprentissage incluant une variable explicative et une variable objective, un modèle d'apprentissage automatique qui estime une variable objective à partir d'une variable explicative, et dans lequel
l'unité d'apprentissage (20) crée un modèle d'apprentissage automatique Mᵢ qui estime une variable objective Oᵢ à partir d'un groupe de variables explicatives Eᵢ incluant une ou plusieurs variables explicatives, définit un nouveau groupe de variables explicatives E_{i + 1} en ajoutant la variable objective Oᵢ estimée par le modèle d'apprentissage automatique Mᵢ au groupe de variables explicatives Eᵢ, et crée un modèle d'apprentissage automatique M_{i + 1} qui estime une variable objective O_{i + 1} à partir du groupe de variables explicatives E_{i + 1}, sachant que i est incrémenté de 1 de manière répétée pour aller de 1 à n, n étant le nombre de variables objectives,
la variable explicative comprend des données primaires mesurables et des données caractéristiques physiques,
les données primaires mesurables comprennent un ou plusieurs parmi un rythme de course, une longueur de foulée, une inclinaison, une durée de contact au sol ou une durée de suspension, mesurées en utilisant un capteur fixé à au moins une chaussure d'un coureur,
les données de caractéristiques physiques comprennent au moins un parmi une taille et un poids,
la variable objective comprend des données secondaires sur les performances de course, et les données secondaires comprennent au moins un parmi une deuxième valeur maximale d'une composante z d'une force de réaction au sol, un produit de force de propulsion, un produit de force de freinage et un taux de croissance de la composante z de la force de réaction au sol.

2. Dispositif d'estimation de données selon la revendication 1, dans lequel l'unité d'apprentissage (20) crée de manière répétée un modèle d'apprentissage automatique pendant que i est compris dans une plage allant de 2 à n, où n est un nombre naturel supérieur ou égal à 2.

3. Dispositif d'estimation de données selon la revendication 2, dans lequel, pour déterminer un ordre dans lequel n variables objectives sont entrées en tant que variables explicatives, l'unité d'apprentissage (20) crée un modèle d'apprentissage automatique dans chaque ordre d'entrée pour calculer l'exactitude de la prédiction concernant les n variables objectives, et sélectionne enfin un ordre d'entrée dans lequel une valeur moyenne de l'exactitude de prédiction concernant les n variables objectives est au plus haut ou un écart type de l'exactitude de la prédiction concernant les n variables objectives est au plus bas.

4. Dispositif d'estimation de données selon la revendication 2, dans lequel l'unité d'apprentissage (20) sélectionne comme variable objective O₁, parmi n variables objectives, une variable objective dont l'exactitude de prédiction est la plus haute en utilisant les variables explicatives par le modèle d'apprentissage automatique.

5. Dispositif d'estimation de données selon la revendication 4, dans lequel l'unité d'apprentissage (20) sélectionne, par ordre décroissant d'une corrélation avec des variables objectives O₁ à O; déjà sélectionnées, des variables objectives ultérieures O_{i + 1}, pour i = 1 à (n-1).

6. Procédé d'estimation de données comprenant un processus d'apprentissage consistant à créer, en utilisant des données d'apprentissage incluant une variable explicative et une variable objective, un modèle d'apprentissage automatique qui estime une variable objective à partir d'une variable explicative, dans lequel
le processus d'apprentissage inclut la création d'un modèle d'apprentissage automatique Mᵢ qui estime une variable objective Oᵢ à partir d'un groupe de variables explicatives Eᵢ incluant une ou plusieurs variables explicatives, la définition d'un nouveau groupe de variables explicatives E_{i + 1} par ajout de la variable objective Oᵢ estimée par le modèle d'apprentissage automatique Mᵢ au groupe de variables explicatives Eᵢ, et la création d'un modèle d'apprentissage automatique M_{i + 1} qui estime une variable objective O_{i + 1} à partir du groupe de variables explicatives E_{i + 1}, i étant incrémenté de 1 de manière répétée pour aller de 1 à n, n étant le nombre de variables objectives,
la variable explicative comprend des données primaires mesurables et des données caractéristiques physiques,
les données primaires mesurables comprennent un ou plusieurs parmi un rythme de course, une longueur de foulée, une inclinaison, une durée de contact au sol et une durée de suspension, mesurées en utilisant un capteur fixé à au moins une chaussure d'un coureur,
les données de caractéristiques physiques comprennent au moins un parmi une taille et un poids,
la variable objective comprend des données secondaires sur les performances de course, et les données secondaires comprennent au moins un parmi une deuxième valeur maximale d'une composante z d'une force de réaction au sol, un produit de force de propulsion, un produit de force de freinage et un taux de croissance de la composante z de la force de réaction au sol.

7. Programme d'estimation de données qui amène un ordinateur à exécuter un processus d'apprentissage consistant à créer, en utilisant des données d'apprentissage incluant une variable explicative et une variable objective, un modèle d'apprentissage automatique qui estime une variable objective à partir d'une variable explicative, dans lequel
le processus d'apprentissage inclut la création d'un modèle d'apprentissage automatique Mᵢ qui estime une variable objective Oᵢ à partir d'un groupe de variables explicatives Eᵢ incluant une ou plusieurs variables explicatives, la définition d'un nouveau groupe de variables explicatives E_{i + 1} par ajout de la variable objective Oᵢ estimée par le modèle d'apprentissage automatique Mᵢ au groupe de variables explicatives Eᵢ, et la création d'un modèle d'apprentissage automatique M_{i + 1} qui estime une variable objective O_{i + 1} à partir du groupe de variables explicatives E_{i + 1}, i étant incrémenté de 1 de manière répétée pour aller de 1 à n, n étant le nombre de variables objectives,
la variable explicative comprend des données primaires mesurables et des données caractéristiques physiques,
les données primaires mesurables comprennent un ou plusieurs parmi un rythme de course, une longueur de foulée, une inclinaison, une durée de contact au sol et une durée de suspension, mesurées en utilisant un capteur fixé à au moins une chaussure d'un coureur,
les données de caractéristiques physiques comprennent au moins un parmi une taille et un poids,
la variable objective comprend des données secondaires sur les performances de course, et les données secondaires comprennent au moins un parmi une deuxième valeur maximale d'une composante z d'une force de réaction au sol, un produit de force de propulsion, un produit de force de freinage et un taux de croissance de la composante z de la force de réaction au sol.
